# EUROPEAN PATENT APPLICATION

(11) **EP 4 501 639 A1**
(43) Date of publication of application: **05.02.2025**
(21) Application number: 23779716.2
(22) Date of filing: 17.03.2023
(51) Int. Cl.: B32B 29/06, B65D 65/40

(54) **OXYGEN SCAVENGER PACKAGING MATERIAL AND OXYGEN SCAVENGER PACKAGE**

(30) Priority: 31.03.2022 JP 2022059645
(71) Applicant: MITSUBISHI GAS CHEMICAL COMPANY, INC., Chiyoda-ku Tokyo 100-8324 (JP)
(72) Inventor: WATANABE, Risa, Tokyo 125-8601 (JP); MASUYAMA, Tomohiro, Tokyo 125-8601 (JP)
(74) Representative: Hoffmann Eitle
(86) International application number: PCT/JP2023/010508
(87) International publication number: WO 2023/189698

(57) **Abstract**

An oxygen scavenger packaging material 1 includes, in this order, an inner layer 10 containing a thermoplastic resin, an intermediate layer 12 containing an oil-resistant paper, and an outer layer 14 containing a thermoplastic resin, the oil-resistant paper containing no fluorine; and the oxygen scavenger packaging material 1 includes an inner side air hole H1 that passes through the inner layer 10 and the intermediate layer 12, and an outer side air hole H2 that passes through the outer layer.

## Description

### Technical Field

The present invention relates to an oxygen scavenger packaging material and an oxygen scavenger package using the same.

### Background Art

For various articles such as food products, beverages, medical and pharmaceutical products, medical supplies, cosmetics, metal products and electronic products that easily degrade or deteriorate under the effect of oxygen, an oxygen scavenger that removes oxygen in a sealed container containing these has been used to prevent oxidation degradation and to enable storage for a long period of time.

The oxygen scavenger has been employed in various methods of use based on purpose or form of the use thereof, and an example thereof is a method of forming a small bag-shaped oxygen scavenger package by packaging an oxygen scavenger, which is powder or tablets, in a packaging material. When this oxygen scavenger package is placed in a sealed container storing a food product or the like, oxidation degradation of the food product or the like can be prevented because the oxygen scavenger in an inner part of the oxygen scavenger package removes oxygen in the sealed container.

As such a packaging material for an oxygen scavenger, for example, sheets of a resin, paper, nonwoven fabric, or the like or a laminate of these has been used. As a packaging material, in which a resin layer and a layer of paper or nonwoven fabric are laminated, for example, a packaging material obtained by laminating a resin layer having an air hole formed in advance and a layer of paper or nonwoven fabric has been used. This attempts ensuring breathability with the outside and effectively exhibiting oxygen scavenging performance of the oxygen scavenger by using the resin layer having an air hole formed in advance.

Furthermore, oxygen scavengers are used for various food products, and when an oxygen scavenger package is used for a food product containing a large amount of oil, in a case where the packaging material does not have oil resistance or has insufficient oil resistance, the oil permeates the packaging material and causes troubles such that oxygen scavenging performance decreases due to decrease in breathability or that appearance of the oxygen scavenger package deteriorates due to the permeated oil. To solve such a problem, known packaging materials often use packaging raw materials, in which an oil-resistant paper impregnated with a fluorine-based oilproof agent and a thermoplastic resin are laminated (Patent Document 1).

### Citation List

### Patent Document

Patent Document 1: JP 2009-035689 A

### Summary of Invention

### Technical Problem

In recent years, use of fluorine-based compounds has been regulated in Europe (EU) and the U.S. (America), and it is thought that such regulations will be global standards in the future. Because of this, removal of fluorine is required also for the oxygen scavenger packaging material; however, the study conducted by the inventors of the present invention revealed that an oil-resistant paper containing no fluorine has problems in the oxygen scavenging performance.

An object of the present invention is to provide an oxygen scavenger packaging material that can exhibit excellent oil resistance and oxygen scavenging performance without use of a fluorine-containing oil-resistant paper, and an oxygen scavenger package using this.

### Solution to Problem

That is, the present invention includes the constituents of gist as follows.
[1] An oxygen scavenger packaging material, including, in this order, an inner layer containing a thermoplastic resin, an intermediate layer containing an oil-resistant paper, and an outer layer containing a thermoplastic resin,
   the oil-resistant paper containing no fluorine; and
   the oxygen scavenger packaging material including an inner side air hole that passes through the inner layer and the intermediate layer and an outer side air hole that passes through the outer layer.
[2] The oxygen scavenger packaging material according to [1] above, where the intermediate layer and the outer layer are partially welded to each other.
[3] The oxygen scavenger packaging material according to [1] or [2] above, where the inner side air hole and the outer side air hole do not communicate with each other.
[4] The oxygen scavenger packaging material according to any one of [1] to [3] above, where the oil-resistant paper has an air resistance in accordance with JIS P 8117:2009 of 100 seconds or longer.
[5] An oxygen scavenger package including:
   the oxygen scavenger packaging material according to any one of [1] to [4] above; and
   an oxygen scavenger wrapped by the oxygen scavenger packaging material.

### Advantageous Effects of Invention

According to the present invention, an oxygen scavenger packaging material that can exhibit excellent oil resistance and oxygen scavenging performance without use of a fluorine-containing oil-resistant paper, and an oxygen scavenger package using this can be provided.

### Brief Description of Drawings

FIG. 1 is a schematic cross-sectional view illustrating an aspect of the oxygen scavenger packaging material according to the present embodiment.
FIG. 2 is a schematic cross-sectional view illustrating another aspect of the oxygen scavenger packaging material according to the present embodiment.
FIG. 3 is a schematic cross-sectional view illustrating an aspect of a known oxygen scavenger packaging material.

### Description of Embodiments

The oxygen scavenger packaging material and the oxygen scavenger package of embodiments according to the present invention will be described in detail below.

Note that, in the present description, a phrase of "A to B" indicating a numerical range means "greater than or equal to A and less than or equal to B" (in the case of A < B), or "less than or equal to A and greater than or equal to B" (in the case of A > B). Furthermore, in the present invention, a combination of preferable aspects is a more preferable aspect.

Furthermore, in the present description, "(meth)acrylate" means acrylate and/or methacrylate, "(meth)acryl" means acryl and/or methacryl, and "(meth)acrylic acid" means acrylic acid and/or methacrylic acid, and the like unless otherwise noted.

### [Oxygen Scavenger Packaging Material]

The oxygen scavenger packaging material of the present invention includes an inner layer containing a thermoplastic resin, an intermediate layer containing an oil-resistant paper, and an outer layer containing a thermoplastic resin, in this order; the oil-resistant paper contains no fluorine; and the oxygen scavenger packaging material contains an inner side air hole that passes through the inner layer and the intermediate layer and an outer side air hole that passes through the outer layer.

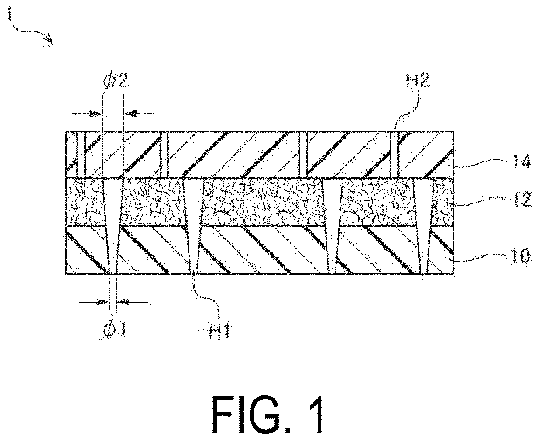

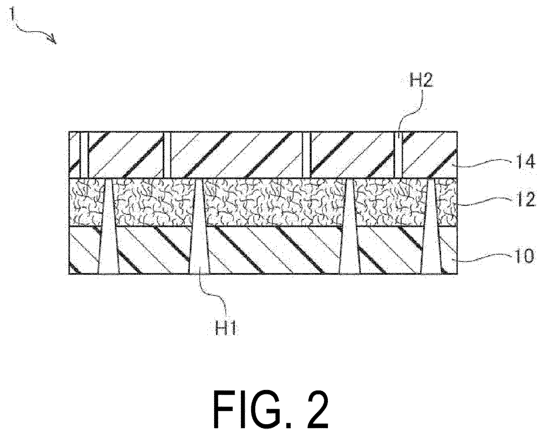

FIGS. 1 and 2 are schematic cross-sectional views each illustrating an aspect of an oxygen scavenger packaging material of the present invention. The oxygen scavenger packaging material (hereinafter, may be simply abbreviated as "packaging material") 1 includes an inner layer 10, an intermediate layer 12, and an outer layer 14 in this order, and includes an inner side air hole H1 passing through the inner layer 10 and the intermediate layer 12 and an outer side air hole H2 passing through the outer layer 14. Note that an oil-resistant paper constituting the intermediate layer 12 does not contain fluorine.

When the packaging material 1 of the present invention has the constitution described above, excellent oil resistance and oxygen scavenging performance can be exhibited without use of a fluorine-containing oil-resistant paper.

The reason why the packaging material of the present invention exhibits the above-mentioned effect is not clear but one possible reason is as follows.

In related art, as an intermediate layer, a fluorine-containing oil-resistant paper obtained by performing oil resistance treatment by a fluorine-containing oilproof agent (hereinafter, simply referred to as "fluorine-based oil-resistant paper") has been widely used.

However, due to the trend of regulations on use of fluorine-based compounds in recent years, replacement with an oil-resistant paper that contains no fluorine, especially that does not use a fluorine-containing oilproof agent, (hereinafter, may simply referred to as "non-fluorine-based oil-resistant paper") has been studied.

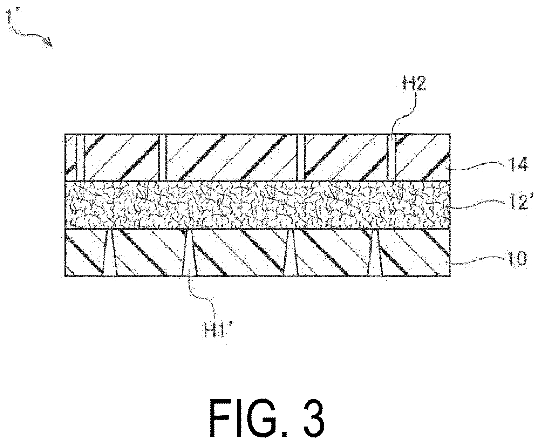

When the inventors of the present invention studied replacement with a non-fluorine-based oil-resistant paper, it was found that the oxygen scavenging performance significantly decreases in a case where a non-fluorine-based oil-resistant paper is used in an intermediate layer 12' in a known packaging material 1' as illustrated in FIG. 3 compared to a case where a fluorine-based oil-resistant paper is used. The reason is presumed to be as follows.

Typically, it is conceived that the oxygen scavenging performance of a packaging material depends on breathability thereof.

As illustrated in FIG. 3, in a known packaging material 1', the inner side air hole H1' passes through the inner layer 10 but does not pass through the intermediate layer 12' made of an oil-resistant paper. In such a constitution, breathability of the packaging material 1' is thought to be depending on breathability of the oil-resistant paper mainly constituting the intermediate layer 12'. When the inventors of the present invention further studied, it was found that a non-fluorine-based oil-resistant paper has poor breathability compared to a fluorine-based oil-resistant paper.

As a result of diligent research, the inventors of the present invention found that, in a case where a non-fluorine-based oil-resistant paper is used for an intermediate layer 12 as illustrated in FIGS. 1 and 2, adequate breathability can be ensured by forming an inner side air hole H1 passing through the inner layer 10 and the intermediate layer 12, and as a result, excellent oxygen scavenging performance can be exhibited.

The details of each layer and components thereof of the packaging material according to the present embodiment will be described below.

### (Inner Layer)

The inner layer 10 is a layer positioned in an inner surface side of the packaging material 1 and containing a thermoplastic resin. The thermoplastic resin is not particularly limited, and appropriate and suitable types of the thermoplastic resin can be selected based on the purpose of use and desired physical properties. Examples of the thermoplastic resin include an olefin-based resin such as polyethylene and polypropylene; an ethylene-vinyl acetate copolymer resin; and an ethylene-(meth)acrylate copolymer resin. Among these, from the viewpoint of adhesiveness, an olefin-based resin is preferred, polyethylene and polypropylene are more preferred, and a straight-chain (linear) low-density polyethylene, high-density polyethylene, and cast polypropylene are even more preferred. These may be used alone or in combination of two or more.

The lower limit value of the melting point of the thermoplastic resin is not particularly limited and is preferably 80°C or higher, more preferably 95°C or higher, and even more preferably 110°C or higher. Furthermore, the upper limit value of the melting point of the thermoplastic resin is preferably 200°C or lower, more preferably 180°C or lower, and even more preferably 150°C or lower. When the thermoplastic resin having a melting point that is not lower than the lower limit value described above is used, failure such as the thermoplastic resin being melted even when heat-sealing is performed at the time of sealing a packaging material does not occur, and as a result, an oxygen scavenger can be reliably contained without occurrence of powder leakage or the like. Furthermore, when the thermoplastic resin having a melting point that is not higher than the upper limit value described above is used, adequate tight sealing can be performed in a short period of time without setting the heat-sealing temperature to a high temperature. More specifically, the melting point of the thermoplastic resin is preferably from 80 to 200°C, more preferably from 95 to 180°C, and even more preferably from 110 to 150°C.

The inner layer 10 may further contain an additional component other than the thermoplastic resin. Examples of such an additional component that can be used in the inner layer 10 include additives, such as a stabilizer, a lubricant, an antistatic agent, an antifogging agent, a filler, a coloring agent, a plasticizer, and a nucleating agent.

The thickness of the inner layer 10 is not particularly limited and is preferably from 0.5 to 80 µm, more preferably from 1 to 60 µm, even more preferably from 2 to 50 µm, yet even more preferably from 4 to 40 µm, and yet even more preferably from 15 to 40 µm. When the thickness of the inner layer 10 is in the range described above, adequate adhesive strength can be achieved by heat-sealing in a short period of time.

### (Intermediate Layer)

The intermediate layer 12 is a layer containing an oil-resistant paper and prevents leakage of the oxygen scavenger contained in the oxygen scavenger package while a certain degree of durability, and oil resistance, breathability, and the like are imparted to the packaging material.

Because the oxygen scavenger package is used widely for food products, beverages, medical and pharmaceutical products, medical supplies, cosmetics, metal products, electronic products, and the like, there may be a large moisture, oil content, or the like depending on an object to be stored or storage environment. In such a case, when the moisture or oil content infiltrates into the oxygen scavenger from the packaging material, the oxygen scavenging performance may deteriorate due to deterioration of the oxygen scavenger or the oxygen scavenger may be contaminated; however, when the intermediate layer 12 including the oil-resistant paper is provided, infiltration of the water, oil content, or the like can be suppressed, and deterioration, contamination, and the like of the oxygen scavenger can be prevented.

In the present description, the oil-resistant paper is a material obtained by imparting oil resistance to a paper or nonwoven fabric. The method of imparting the oil resistance is not particularly limited, and examples thereof include (1) a method of allowing a paper or nonwoven fabric to have oil resistance by filling gaps of the paper or nonwoven fabric, (2) a method of forming an oil resistant film by application of an oilproof agent having oil resistance, a chemical that solidifies oil, or the like on a surface of a paper or nonwoven fabric, and (3) a method of allowing a paper or nonwoven fabric to contain (impregnated with or internally added) an oilproof agent having oil resistance.

The material of the paper used for the oil-resistant paper is not particularly limited, and examples thereof include water-repellent paper, kraft paper, woodfree paper (machine-made paper), and Japanese paper. The material of the nonwoven fabric used for the oil-resistant paper is not particularly limited, and examples thereof include a thermoplastic resin such as polyethylene, polypropylene, polyamide, and polyester. More specific examples thereof include a straight-chain (linear) low-density polyethylene (LLDPE)-based nonwoven fabric, a polyethylene terephthalate-based nonwoven fabric, a composite nonwoven fabric (such as polyethylene terephthalate-polyethylene having a core-sheath structure), and Tyvek (trade name, available from DuPont-Asahi Flash Spun Products Co., Ltd.).

Furthermore, the oil-resistant paper used in the present invention contains no fluorine.

In the present description, "contain no fluorine" means that fluorine that is blended by design as a component to be contained is not contained. Thus, a case where fluorine is contained without intention is excluded from this. Examples of the fluorine contained without intention include fluorine as inevitable impurities slightly mixed during a production process, a washing process, and the like. In the oil-resistant paper containing no fluorine used in the present invention, the content of fluorine contained without intention is, for example, less than 100 ppm.

A specific example of the oil-resistant paper containing no fluorine is an oil-resistant paper, in which oil resistance is imparted to a paper or nonwoven fabric without use of a fluorine-containing oilproof agent (non-fluorine-based oil-resistant paper). As the non-fluorine-based oil-resistant paper, a known non-fluorine-based oil-resistant paper can be used without particular limitation as long as the non-fluorine-based oil-resistant paper is an oil-resistant paper containing no fluorine and having a certain degree of oil resistance. Examples thereof include (1) a non-fluorine-based oil-resistant paper, in which gaps of a paper or nonwoven fabric are filled and thus the paper or nonwoven fabric has oil resistance, (2) a non-fluorine-based oil-resistant paper, in which an oil resistant film is formed by application of a non-fluorine-based oilproof agent having oil resistance, a non-fluorine-based chemical that solidifies oil, or the like on a surface of a paper or nonwoven fabric, or (3) a non-fluorine-based oil-resistant paper obtained by allowing a paper or nonwoven fabric to contain (impregnated with or internally added) a non-fluorine-based oilproof agent having oil resistance. Among these, from the viewpoint of preventing oil stains from the inner part (face part on an inner side of a hole) of the inner side air hole, the oil-resistant paper of (3) described above is preferred. Note that examples of the non-fluorine-based oilproof agent include a starch-based oilproof agent, an acrylic oilproof agent, and a polyester-based oilproof agent.

The basis weight of the oil-resistant paper is not particularly limited and is preferably from 5 to 200 g/m², more preferably from 15 to 150 g/m², and even more preferably from 25 to 90 g/m². When the basis weight of the oil-resistant paper is in the range described above, adequate oil resistance and durability can be achieved.

Furthermore, the breathability of the oil-resistant paper is not particularly limited and, for example, the air resistance in accordance with JIS P 8117:2009 may be 100 seconds or longer. In the present invention, an oil-resistant paper having relatively low breathability can be used because the breathability in the thickness direction of the packaging material 1 can be adequately ensured by formation of the inner side air hole H1 passing through the inner layer 10 and the intermediate layer 12. The upper limit of the air resistance is not particularly limited and is, for example, 100000 seconds or shorter, preferably 5000 seconds or shorter, and more preferably 2000 seconds or shorter. More specifically, the air resistance is, for example, from 100 to 100000 seconds, preferably from 100 to 5000 seconds, and more preferably from 100 to 2000 seconds.

The intermediate layer 12 may contain an additional component other than the components constituting the oil-resistant paper. Examples of such an additional component that can be used in the intermediate layer 12 include a sizing agent (bleeding-preventing agent), a waterproof agent, a water-repellent agent, a paper strengthening agent, and a dye. Note that the intermediate layer 12 is preferably made only of the oil-resistant paper.

The thickness of the intermediate layer 12 is not particularly limited and is preferably from 5 to 300 µm, more preferably from 15 to 200 µm, and even more preferably from 30 to 150 µm. When the thickness of the intermediate layer 12 is in the range described above, adequate oil resistance and durability can be achieved.

### (Inner Side Air Hole)

The inner side air hole H1 is a hole passing through from the surface of the inner layer 10 to the surface of the intermediate layer 12.

In related art, for example, a technique by which an inner layer 10 having undergone a hole opening treatment in advance and an intermediate layer 12' containing an oil-resistant paper are laminated has been used (FIG. 3). However, in a case of this constitution, breathability of the packaging material 1' is thought to be depending on breathability of the oil-resistant paper constituting the intermediate layer 12'. Because of this, in a case where a non-fluorine-based oil-resistant paper having breathability inferior to that of a fluorine-based oil-resistant paper is used as the intermediate layer 12', there is a problem of deterioration in breathability of the packaging material 1'.

On the other hand, in the packaging material 1 of the present invention, the inner side air hole H1 does not stay within the inner layer 10 but passes through the inner layer 10 and the intermediate layer 12 (FIGS. 1 and 2). Due to the inner side air hole H1 in this manner, the breathability of the packaging material 1 can be adequately ensured without depending on the breathability of the oil-resistant paper. Thus, even when a non-fluorine-based oil-resistant paper having breathability inferior to that of a fluorine-based oil-resistant paper is used, it is conceived that adequate breathability as an entire packaging material 1 can be ensured.

The arrangement of the inner side air hole H1 is not particularly limited and may be (1) an arrangement, in which an inner side air hole H1 passes through the inner layer 10 and the intermediate layer 12 continuously, or (2) an arrangement, in which an air hole passing through the inner layer 10 and an air hole passing through the intermediate layer 12 communicate with each other. From the viewpoint of ease in forming a through hole, (1) above is preferred.

The hole size (diameter) or hole density of the inner side air hole H1 can be appropriately adjusted to achieve a target breathability (air permeability) as an entire packaging material 1. Specifically, in a case where an edged tool or a needle is used, the adjustment can be made by the shape, introduction direction, arrangement, number, and the like of the edged tool or the needle; and in a case where a laser or an electron beam is used, the adjustment can be made by perforation conditions such as irradiation voltage, electric current, irradiation time, and irradiation direction.

Furthermore, for the shape of the inner side air hole H1, a cross-sectional face is not particularly limited and examples thereof include a circle, a triangle, a rectangle, a square, and an ellipse; however, a longitudinal section is preferably a conical or pyramid-like shape tapered from the inner layer 10 towards the intermediate layer 12 or from the intermediate layer 12 towards the inner layer 10.

Furthermore, the size (diameter) of the inner side air hole H1 is not particularly limited. The size ϕ1 of the inner side air hole H1 on a surface, which is not in contact with the intermediate layer 12, of the inner layer 10 and the size ϕ2 of the inner side air hole H1 on a surface, which is not in contact with the inner layer 10, of the intermediate layer 12 may be the same or different. Note that the sizes ϕ1 and ϕ2 of the inner side air hole H1 can be measured by the method described in Examples, and are each a dimension (major axis) of the longest part of the opening size.

The sizes ϕ1 and ϕ2 of the inner side air hole H1 can be appropriately adjusted based on oil resistance, breathability, and the like required as the packaging material 1, and an example thereof is from 100 to 750 µm, preferably from 150 to 650 µm, and more preferably from 200 to 550 µm. When the sizes are in the ranges described above, while oil resistance and breathability are provided in a compatible manner, it is possible to prevent an oxygen scavenger arranged inside from leaking to outside when an oxygen scavenger package is formed.

### (Outer Layer)

The outer layer 14 is a layer, which contains a thermoplastic resin and in which an outer side air hole H2 is formed. The outer layer 14 can use a monolayered film or a multilayered film made of two or more layers of different materials. Because heat lamination is preferably used for adhesion of the outer layer 14 and the intermediate layer 12, for the outer layer 14, use of a multilayered film made of two or more types of thermoplastic resins for which a difference between melting points is large, such as a two-layered film in which a layer made of a thermoplastic resin having a high melting point such as polyethylene terephthalate or nylon is disposed on an outer side and a layer made of a thermoplastic resin having a low melting point is disposed on an inner side is preferred. The layer having a low melting point preferably contains a raw material having heat-sealing properties. Examples of the raw material having heat-sealing properties include resins, such as a low-density polyethylene, a medium-density polyethylene, a high-density polyethylene, a straight-chain (linear) low-density polyethylene, a polypropylene, an ethylene-vinyl acetate copolymer, an ionomer resin, an ethylene-acrylic acid copolymer, an ethylene-ethyl acrylate copolymer, an ethylene-methacrylic acid copolymer, an ethylene-α-olefin copolymer obtained by polymerization using a metallocene catalyst, a polypropylene, an ethylene-methyl methacrylate copolymer, an ethylene-propylene copolymer, a methylpentene polymer, a polybutene polymer, an acid-modified polyolefin resin obtained by modifying a polyolefin-based resin such as polyethylene or polypropylene with an unsaturated carboxylic acid such as acrylic acid, methacrylic acid, maleic acid, maleic anhydride, fumaric acid, or itaconic acid, a polyvinyl acetate-based resin, a poly(meth)acrylic resin, and a polyvinyl chloride-based resin. Note that a larger difference in melting points of the thermoplastic resin of the inner layer 10 and the thermoplastic resin of the outer layer 14 is preferred because the degree of freedom in heat-sealing conditions (temperature, pressure, time) becomes high.

The outer layer 14 may further contain an additional component other than the thermoplastic resin. As the additional component that can be used in the outer layer 14, those described as the additional components for the inner layer 10 can be appropriately used.

The thickness of the outer layer 14 is not particularly limited and is preferably from 1 to 50 µm, more preferably from 2 to 40 µm, even more preferably from 4 to 35 µm, and yet even more preferably from 8 to 30 µm. When the thickness of the outer layer 14 is in the range described above, a packaging material having an adequate strength can be obtained, and a packaging material having a proper flexibility required for processing, such as bending, during the production of the oxygen scavenger package described below can be obtained.

The surface of the outer layer 14 can be printed or painted by gravure printing and the like.

### (Outer Side Air Hole)

The outer side air hole H2 is a hole passing through the outer layer 14.

The arrangement of the inner side air hole H1 and the outer side air hole H2 is not particularly limited, and the inner side air hole H1 and the outer side air hole H2 are preferably not communicating. Due to the inner side air hole H1 and the outer side air hole H2 not communicating each other, when an oxygen scavenger package is formed, leakage of the oxygen scavenger disposed inside to the outside can be effectively prevented while adhering of a component disposed outside to the oxygen scavenger disposed inside can be effectively prevented.

The hole size (diameter) or hole density of the outer side air hole H2 can be appropriately adjusted to achieve a target breathability (air permeability) as an entire packaging material 1. Specifically, the formation method, shape, opening size, and the like of the outer side air hole H2 can be appropriately adjusted by the conditions described for the inner side air hole H1.

### (Properties of Oxygen Scavenger Packaging Material)

The packaging material 1 of the present invention can exhibit excellent oil resistance and oxygen scavenging performance without use of a fluorine-containing oil-resistant paper.

For the oil resistance of the packaging material 1, for example, the kit number evaluated in accordance with "Paper and Paperboard-Testing Method for Oil Repellency (Kit Method)" specified in J.TAPPI Pulp Testing Method No. 41:2000 can be used as an index, and the oil resistance of the packaging material 1 is preferably kit number 2 or higher, and more preferably 4 or higher. When the number is in the range described above, excellent oil resistance can be exhibited.

Furthermore, because the packaging material 1 has adequate breathability, excellent oxygen scavenging performance can be exhibited.

### (Production Method)

The production method of the packaging material 1 of the present invention is not particularly limited, and preferred examples are as follows.

Preferred examples include a production method including a process of preparing a laminate (not illustrated) including an inner layer 10 and an intermediate layer 12 in this order, a process of forming an inner side air hole H1 by subjecting the laminate to a hole opening treatment in a manner that the inner layer 10 and the intermediate layer 12 are penetrated, and a process of further laminating an outer layer 14 having an outer side air hole H2 on a side of the intermediate layer 12 of the laminate, in which the inner side air hole H1 has been formed.

The method of laminating the inner layer 10 and the intermediate layer 12 is not particularly limited, and a known method can be employed. For example, heat lamination may be employed, or dry lamination may be employed. In a case of dry lamination, lamination may be performed by using an adhesive agent in a manner that the order becomes inner layer 10/adhesive layer (not illustrated)/intermediate layer 12. From the viewpoint of preventing leakage of an adhesive agent, no adhesive agent is preferably used. Specifically, heat lamination is more preferred than dry lamination.

The method of the hole opening treatment is not particularly limited, and examples thereof include a method of using a needle, a method of using an edged tool, a method of using an electron beam irradiation, and a method of using a laser.

Among these, from the viewpoint of ease in controlling the size and position of the opening, a method of opening a hole by using a needle is preferred. From the viewpoint of producing an oxygen scavenger packaging material having stable density and shape of successive holes, a method of opening holes through a columnar jig having needles on a side face (hereinafter, also referred to as "needle roll") is more preferred. The diameter of a needle of the needle roll is preferably from 0.3 to 1.0 mm, and more preferably from 0.5 to 0.7 mm. When the diameter of the needle is in the preferred range described above, the opening shape becomes stable, and adjustment of air permeability becomes easy. Furthermore, a needle pattern can be appropriately adjusted taking air permeability and oil resistance into consideration. Furthermore, when the needle roll is used, holes can be opened even when the temperature of the needle roll is at room temperature; however, when the needle roll is heated in a range that does not exceed the melting point of the resin used for a layer for which the holes are opened, the hole opening treatment can be more stably performed.

The treatment direction of the hole opening treatment (formation direction of the inner side air holes H1) may be in a manner that the penetration is formed from the surface of the intermediate layer 12 to the inner layer 10 or is formed from the surface of the inner layer 10 to the intermediate layer 12. Due to the formation direction, the shape of the longitudinal section of the inner side air hole H1 is changed, and air permeability and oil resistance can be adjusted. In particular, from the viewpoints of forming an appropriate through hole by adequate penetration of the two layers and achieving excellent breathability by this, the penetration is preferably formed from the surface of the intermediate layer 12 to the inner layer 10.

The size of the inner side air hole H1 can be appropriately controlled by the jig used for the hole opening treatment, the formation direction, and the like. Specifically, in a case where a needle having a tapered conical shape is used, when the size of the inner side air hole H1 on a surface, which is not in contact with the intermediate layer 12, of the inner layer 10 is ϕ1 and the size of the inner side air hole H1 on a surface, which is not in contact with the inner layer 10, of the intermediate layer 12 is ϕ2, (1) a relationship of ϕ1 < ϕ2 is satisfied when the inner side air hole H1 is formed in a manner that penetration is formed from the surface of the intermediate layer 12 to the inner layer 10, and (2) a relationship of ϕ1 > ϕ2 is satisfied when the inner side air hole H1 is formed in a manner that penetration is formed from the surface of the inner layer 10 to the intermediate layer 12.

The method of laminating the outer layer 14 onto the laminate having undergone the hole opening treatment is not particularly limited, and a known method can be employed. For example, heat lamination may be employed, or dry lamination may be employed. In a case of dry lamination, lamination may be performed by using an adhesive agent in a manner that the order becomes intermediate layer 12/adhesive layer (not illustrated)/outer layer 14. From the viewpoint of preventing leakage of an adhesive agent, no adhesive agent is preferably used. Specifically, heat lamination is more preferred than dry lamination.

In particular, in a case of heat lamination, from the viewpoint of improving breathability, partial welding is preferred. That is, the packaging material 1 of the present invention is preferably formed by partially welding the intermediate layer 12 and the outer layer 14 to each other. In such a packaging material 1, it is conceived that air can transfer from the inner side air hole H1 passing through the inner layer 10 and the intermediate layer 12 to the outer side air hole H2 passing through the outer layer 14 through the gap between the intermediate layer 12 and the outer layer 14, and breathability of the packaging material 1 can be further improved.

The method of partial welding is not particularly limited and a known method can be used, and an example is a method of welding using a heat roll having a pattern such as a lattice pattern or a dot pattern. Among these, from the viewpoint of improving adhesiveness, a lattice pattern is preferred. Furthermore, from the viewpoint of improving breathability, the welding proportion of the partial welding (area proportion (%) of an area of a welded portion with respect to an area of the entire partially welded region) is, for example, 50% or less, preferably 30% or less, more preferably 20% or less, and from the viewpoint of improving adhesiveness, is preferably 8% or greater, and more preferably 12% or greater. Specifically, the welding proportion of the partial welding is, for example, from 8 to 50%, preferably from 8 to 30%, and more preferably from 12 to 20%.

Furthermore, when the molded article in which the inner side air hole H1 is formed and the outer layer 14 having the outer side air hole H2 are laminated, it is preferred to dispose the inner side air hole H1 and the outer side air hole H2 in a manner that the inner side air hole H1 and the outer side air hole H2 do not communicate with each other. When the inner side air hole H1 and the outer side air hole H2 do not communicate with each other, when an oxygen scavenger package is formed, leakage of the oxygen scavenger disposed inside to the outside can be effectively prevented while adhering of a component disposed outside to the oxygen scavenger disposed inside can be effectively prevented.

### [Oxygen Scavenger Package]

The packaging material 1 of the present invention is preferably used for production of an oxygen scavenger package. Specifically, by packaging an oxygen scavenger using the packaging material 1 of the present invention, an oxygen scavenger package can be obtained.

That is, the oxygen scavenger package of the present invention includes the oxygen scavenger packaging material 1 described above and the oxygen scavenger wrapped by the oxygen scavenger packaging material 1.

Since the packaging material 1 of the present invention has excellent oil resistance and breathability, the oxygen scavenger package obtained by using this can exhibit excellent oil resistance and oxygen scavenging performance.

The method of packaging the oxygen scavenger using the packaging material 1 of the present invention is not particularly limited, and appropriate and suitable methods can be employed taking the purpose of use, environment, and the like into consideration. For example, the oxygen scavenger is preferably wrapped in a manner that the oxygen scavenger is brought into contact with the inner layer 10 of the packaging material 1. Because the laminated part of the inner layer 10 and the intermediate layer 12 has excellent oil resistance as described above and also has excellent breathability due to the inner side air hole H1 passing though the inner layer 10 and the intermediate layer 12, by allowing the oxygen scavenger to be included in a manner that the oxygen scavenger is in contact with the inner layer 10, permeation of an oil component from the outside can be prevented, and adequate oxygen scavenging performance can be exhibited.

The type of the oxygen scavenger is not particularly limited, and a known oxygen scavenger can be used. Examples of a main agent for the oxygen scavenger include a metal powder such as an iron powder, an organic compound such as ascorbic acid, and a macromolecular compound having a carbon-carbon double bond. The oxygen scavenger does not need to be necessarily one component and may be, for example, a combination of a metal powder such as an iron powder, and a metal catalyst, water, a metal salt, or a carrier.

In particular, in a case where oil permeates the packaging material for the oxygen scavenger containing an iron powder as a main agent, a unique odor may be generated by a reaction between the permeated oil and the iron powder of the oxygen scavenger. To suppress generation of such an odor, as the packaging material for packaging the oxygen scavenger containing iron as the main agent, high oil resistance as well as excellent breathability are required. Because the packaging material 1 of the present invention can exhibit particularly excellent oil resistance while good breathability is achieved, the packaging material 1 is preferably used for a case where the oxygen scavenger contains an iron powder as a main agent. The oxygen scavenger containing the iron powder as a main agent is preferably an iron-based self-reacting oxygen scavenger containing an iron powder, a metal halide, a carrier, and water.

The form of the oxygen scavenger is not particularly limited, and appropriate and suitable forms can be employed taking the purpose of use, environment, and the like into consideration. For example, the form may be a powder form or a form obtained by shape processing into a tablet or the like. In a case of a powder form, the size and the shape of holes, the layer structure, and the like are preferably adjusted in a manner that the powder does not leak from the inner side air hole H1 and the outer side air hole H2 to the outside.

Although the embodiments of the present invention have been described above, the present invention is not limited to the above-described embodiments, and includes all aspects included in the concept of the present invention and the scope of the claims, and can be variously modified within the scope of the present invention.

### Examples

Hereinafter, the present embodiment will be described in detail using Examples and Comparative Examples, but the present embodiment can be modified as appropriate as long as the present embodiment achieves the effects of the present invention. Various measurements and evaluations in Examples and Comparative Examples were performed as follows.

### (Air Resistance)

The air resistance of the oil-resistant paper was measured by using an Oken type airpermeability tester (model: EG02, available from Asahi Seiko Co., Ltd.) in accordance with JIS P 8117:2009. Note that the measurement was performed by a mode in which a median of the measurable range was 2000. Furthermore, the measurement was performed 10 times for the same oil-resistant paper.

### (Opening Size)

For the opening size (diameter), the inner side air hole H1 on the surface (face that was not in contact with the intermediate layer) of the inner layer of the obtained packaging material multilayered film was observed, and the dimension (major axis) of the longest part of the opening size was measured. The measurement was performed by measuring a distance between two points by using a digital microscope (VHX-5000, available from Keyence Corporation) and its accompanying software. Furthermore, the measurement was performed for freely chosen six inner side air holes H1 on the surface of the inner layer, and an average value of the measured values (N = 6) was used as the opening size (size ϕ1).

### (Oil Resistance)

The evaluation of the oil resistance was performed for the obtained packaging material multilayered film in accordance with J. TAPPI Pulp Testing Method No. 41:2000 "Paper and Paperboard-Testing Method for Oil Repellency (Kit Method)". Note that the application surface of the test liquid was on the outer layer side of the packaging material multilayered film.

A larger value of the kit number indicates higher oil resistance and, in the present examples, "2" or higher was considered to be passing.

### (Oxygen Scavenging Performance)

For the evaluation of the oxygen scavenging performance, using an oxygen scavenger package produced by the following method (1), evaluation was performed by the following method (2). The production method and the evaluation method of the oxygen scavenger package will be described in detail below.

### (1) Production of Oxygen Scavenger Package

The obtained packaging material multilayered film was folded in a manner that the inner layer side became the inner side and heat-sealed in a manner that one side was open, and thus a small bag having an external size of 40 mm × 40 mm was produced. In this small bag, 1.4 g of an oxygen scavenger (iron-based self-reacting oxygen scavenger containing an iron powder, calcium chloride, sodium chloride, diatomaceous earth impregnated with water, and active carbon) was charged, and then the open side was heat-sealed and closed. An oxygen scavenger package was thus obtained.

### (2) Evaluation

The oxygen scavenger package obtained in (1) above was placed in an oxygen barrier bag (size: 180 mm × 250 mm; oxygen permeability: 0.53 mL/m²·24 h·MPa or less (Mocon method, 20°C, 65%RH)) together with 250 mL of air and tightly sealed. Then, the sealed oxygen barrier bag was immediately placed in a thermostat oven at 25°C.

Thereafter, at regular time intervals, the oxygen concentration change was plotted by successively measuring the oxygen concentration in the oxygen barrier bag, and the estimated time at which the oxygen concentration in the oxygen barrier bag became 0.1 vol.% or less was evaluated as the deoxidation time. Note that the measurement interval of the successive measurement is every 8 hours after 16 hours had passed for Examples 1 to 5, every 24 hours for Comparative Examples 1 to 3, and every 4 hours for Comparative Examples 4 and 5.

Note that the measurement of the oxygen concentration was performed by automated measurement by inserting a measurement needle inside the oxygen barrier bag from a rubber sheet for sampling (25 mm × 25 mm; thickness: 2 mm), the rubber sheet being adhered onto the surface of the oxygen barrier bag in advance, by using a gas analyzer ("CheckMate 3", available from Mocon Dansensor).

In the present examples, a case where the deoxidation time was longer than 94 hours (indicated by "> 94" in the table) was determined to have insufficient deoxidation performance.

### (Example 1)

First, raw materials used as the outer layer, the intermediate layer, and the inner layer constituting the packaging material multilayered film are described below.

### <Outer Layer>

As the outer layer, a film having a two-layer structure having undergone a hole opening treatment described below was used.

First, a polyethylene terephthalate (thickness: 12 µm; melting point: 265°C; hereinafter, referred to as "PET") and a low-density polyethylene (thickness: 15 µm; melting point: 110°C; hereinafter, referred to as "PE") were layered, extrusion-laminated, and thus a film having a two layer structure (thickness: 27 µm) was obtained.

Then, the obtained film having the two-layer structure was subjected to a hole opening treatment using a needle roll (needle pattern: 10.0 mm × 10.0 mm) in a manner that from the surface of the PET to the PE was penetrated, and thus outer side air holes were formed.

### <Intermediate Layer>

As the intermediate layer, an oil-resistant paper (basis weight: 35 g/m²; hereinafter, referred to as " oil-resistant paper 35") impregnated with a starch-based oilproof agent as an oil-resistant paper containing no fluorine-containing oilproof agent was used.

### <Inner Layer>

As an inner layer, a straight-chain low-density polyethylene (thickness: 30 µm; melting point: 130°C; hereinafter, referred to as "LLDPE30") was used.

First, the intermediate layer and the inner layer were layered and subjected to heat lamination at 200°C, the entire surface was then welded, and thus a two-layered composite film was obtained.

This two-layered composite film was subjected to a hole opening treatment using a needle roll (needle pattern: 5.0 mm × 5.0 mm) in a manner that from the surface of the intermediate layer to the inner layer was penetrated, and thus inner side air holes were formed.

Thereafter, the PE side of the outer layer and the intermediate layer side of the two-layered composite film after the hole opening treatment were faced to each other and layered in an arrangement that does not allow communication of the inner side air holes and the outer side air holes, subjected to heat lamination at 200°C and partially welded, and thus a packaging material multilayered film (oxygen scavenger packaging material) was obtained.

Note that a heat roll having a diamond-shaped lattice pattern was used for the partial welding. At this time, the welding proportion [%] (area of a part welded [mm²] × 100/area of entire partially welded region [mm²]) was 16.8%.

The obtained packaging material multilayered film had a layer structure of outer layer (PET/PE)/intermediate layer (oil-resistant paper 35)/inner layer (LLDPE 30) (corresponding to FIG. 1). Furthermore, the opening size (size ϕ1) on the surface of the inner layer of the inner side air hole formed in the obtained packaging material multilayered film was 323 µm.

Furthermore, for the obtained packaging material multilayered film, the oil resistance and the oxygen scavenging performance were evaluated. The results are indicated in Table 1.

### (Examples 2 and 3)

In Examples 2 and 3, packaging material multilayered films were each obtained by the same method as for Example 1 except for using the oil-resistant paper listed in Table 1 in place of the oil-resistant paper 35 as the intermediate layer. The evaluation results are shown in Table 1.

### (Examples 4 and 5)

In Examples 4 and 5, packaging material multilayered films were each obtained by the same method as for Example 1 except for using the oil-resistant paper listed in Table 1 in place of the oil-resistant paper 35 as the intermediate layer and performing the hole opening treatment in a manner that the penetration was formed from the surface of the inner layer to the intermediate layer during formation of the inner side air holes for the two-layered composite film including the intermediate layer and the inner layer (corresponding to FIG. 2). The evaluation results are shown in Table 1.

### (Comparative Example 1)

In Comparative Example 1, a packaging material multilayered film was obtained by the same method as for Example 1 except for layering in a manner that the PE side of the outer layer and the intermediate layer side of the two-layered composite film produced by the following method were facing each other (corresponding to FIG. 3). The evaluation results are shown in Table 1.

### <Production of Two-Layered Composite Film>

First, hole opening treatment was performed for the inner layer (LLDPE 30) by using a needle roll (needle pattern: 5.0 mm × 5.0 mm).

Thereafter, the inner layer and the intermediate layer (oil-resistant paper 35) were layered in a manner that the face, to which the needle roll was inserted, became the outer side and subjected to heat lamination at 200°C, the entire surface was then welded, and thus a two-layered composite film was obtained.

The obtained two-layered composite film had a structure, in which the inner side air holes were formed only in the inner layer and the inner side air holes did not pass through the intermediate layer.

### (Comparative Examples 2 to 5)

In Comparative Examples 2 to 5, packaging material multilayered films were each obtained by the same method as for Comparative Example 1 except for using the oil-resistant paper listed in Table 1 in place of the oil-resistant paper 35 as the intermediate layer. The evaluation results are shown in Table 1.

### [Table 1]

**Table 1**

| | Oil-resistant paper | | Inner side air hole | | | Property evaluation | |
|---|---|---|---|---|---|---|---|
| | Type | Fluorine | Formation direction | Presence of penetration through inner layer and intermediate layer | Opening size on inner layer surface (size ϕ1) [µm] | Oil resistance [Kit number] | Oxygen scavenging performance [Deoxidation time (h)] |
| Example 1 | Oil-resistant paper 35 | Not contained | From intermediate layer side | Present | 323 | 12 | 39 |
| Example 2 | Oil-resistant paper 50T | | | | 364 | 4 | 39 |
| Example 3 | Oil-resistant paper 50N | | | | 347 | 12 | 23 |
| Example 4 | Oil-resistant paper 50T | | From inner layer side | | 364 | 7 | 43 |
| Example 5 | Oil-resistant paper 50N | | | | 347 | 7 | 32 |
| Comparative Example 1 | Oil-resistant paper 35 | | (Only inner layer) | Absent | 481 | 12 | > 94 |
| Comparative Example 2 | Oil-resistant paper 50T | | | | | 12 | > 94 |
| Comparative Example 3 | Oil-resistant paper 50N | | | | | 12 | > 94 |
| Comparative Example 4 | F oil-resistant paper 38 | Contained | | | | 5 | 10 |
| Comparative Example 5 | F oil-resistant paper 50 | | | | | 7 | 13 |

The details of the oil-resistant papers in Table 1 are described below.
- Oil-resistant paper 35: Oil-resistant paper impregnated with a starch-based oilproof agent (oil-resistant paper without fluorine-containing oilproof agent; basis weight: 35 g/m²; air resistance: 340 to 1700 seconds (average: 765 seconds))
- Oil-resistant paper 50T: Oil-resistant paper obtained by applying a chemical that solidifies oil on the surface (oil-resistant paper without fluorine-containing oilproof agent; basis weight: 50 g/m²; air resistance: 550 to 1900 seconds (average: 1286 seconds))
- Oil-resistant paper 50N: Oil-resistant paper in which oil resistance was exhibited by filling the gaps in the paper fibers (oil-resistant paper without fluorine-containing oilproof agent: basis weight 50 g/m²; air resistance: 100000 seconds or longer)
- F oil-resistant paper 38: Oil-resistant paper in which a fluorine-containing oilproof agent was added inside (oil-resistant paper with a fluorine-containing oilproof agent; basis weight: 38 g/m²; air resistance: 8 to 10 seconds (average: 9 seconds))
- F oil-resistant paper 50: Oil-resistant paper obtained by applying a fluorine-containing oilproof agent on the surface (oil-resistant paper with a fluorine-containing oilproof agent; basis weight: 50 g/m²; air resistance: 6 to 9 seconds (average: 7 seconds))

As is clear from Table 1, it was confirmed that the packaging material multilayered films each using an oil-resistant paper containing no fluorine and having inner side air holes passing through the inner layer and the intermediate layer can exhibit excellent oil resistance and oxygen scavenging performance (Examples 1 to 5).

On the other hand, it was found that the packaging material multilayered films each using an oil-resistant paper that contained no fluorine and that had the inner side air holes only in the inner layer and not passing through the intermediate layer were not able to achieve adequate oxygen scavenging performance although the oil resistance was high (Comparative Examples 1 to 3).

Note that the packaging material multilayered films each using a fluorine-containing oil-resistant paper was able to exhibit adequate oxygen scavenging performance even when the inner side air holes are formed only in the inner layer and not passing through the intermediate layer; however, in the future, use of the fluorine-containing oil-resistant paper may be regulated (Comparative Examples 4 and 5).

### Industrial Applicability

The oxygen scavenger packaging material and the oxygen scavenger package according to the present invention can be used in a wide variety of uses, such as food products, cooked food products, beverages, medical and pharmaceutical products, and health food products, regardless of a target object.

### Reference Signs List

1 Packaging material
10 Inner layer
12 Intermediate layer
14 Outer layer
H1 Inner side air hole
H2 Outer side air hole
ϕ1 Opening size of surface of inner layer
ϕ2 Opening size of surface of intermediate layer

## Claims

1. An oxygen scavenger packaging material, comprising, in this order, an inner layer containing a thermoplastic resin, an intermediate layer containing an oil-resistant paper, and an outer layer containing a thermoplastic resin,
the oil-resistant paper containing no fluorine; and
the oxygen scavenger packaging material comprising: an inner side air hole configured to pass through the inner layer and the intermediate layer; and an outer side air hole configured to pass through the outer layer.

2. The oxygen scavenger packaging material according to claim 1, wherein the intermediate layer and the outer layer are partially welded to each other.

3. The oxygen scavenger packaging material according to claim 1 or 2, wherein the inner side air hole and the outer side air hole do not communicate with each other.

4. The oxygen scavenger packaging material according to any one of claims 1 to 3, wherein the oil-resistant paper has an air resistance in accordance with JIS P 8117:2009 of 100 seconds or longer.

5. An oxygen scavenger package, comprising:
the oxygen scavenger packaging material according to any one of claims 1 to 4; and
an oxygen scavenger wrapped by the oxygen scavenger packaging material.
